# EUROPÄISCHE PATENTSCHRIFT

(11) **EP 1 261 293 B1**
(45) Veröffentlichungstag und Bekanntmachung des Hinweises auf die Patenterteilung: **26.07.2006**
(21) Anmeldenummer: 01913605.0
(22) Anmeldetag: 08.02.2001
(51) Int. Cl.: A61C 13/08, A61C 5/10

(54) **VERFAHREN ZUR PRÄPARATION VON ZÄHNEN**
METHOD FOR PREPARING TEETH
PROCEDE POUR PREPARER DES DENTS ARTIFICIELLES

(30) Priorität: 08.02.2000 DE 10005354
(43) Veröffentlichungstag der Anmeldung: 04.12.2002
(73) Patentinhaber: Dental Consulting Mönkmeyer S.L., 07660 Cala d'Or (ES)
(72) Erfinder: Mönkmeyer, Ulrich, 07760 Cala d'Or (ES)
(74) Vertreter: Kunz, Herbert
(86) Internationale Anmeldenummer: PCT/DE2001/000493
(87) Internationale Veröffentlichungsnummer: WO 2001/058378

(56) Entgegenhaltungen:
- WO-A-99/13796
- DE-A- 19 654 055
- US-A- 3 487 544

## Beschreibung

Die Erfindung betrifft ein Verfahren zur Präparation der Zähne eines Sortiments von funktions- und farbgerecht Konfektionieten, fabrikatorisch hergestellten Zähnen.

Die konventionelle Art, einen Zahn zu versorgen, besteht darin, den in der Mundhöhle präparierten, beschliffenen Zahn abzuformen, um ein Modell anzufertigen. Das Modell besteht üblicherweise aus Gips. Der beschliffene, präparierte Zahn wird bis zur Fertigstellung des Zahnersatzes mit einem Kunststoffprovisorium, einer provisorischen Krone, versorgt. Hierzu wird unter anderem- eine von Marxkors 1983 als "Immediatprovisorium" beschriebene Methode angewandt. Dabei werden vorgefertigte Kronenhülsen, die nach Formen und Farben sortiert sind, durch Ausschleifen auf Spielpassung zum präparierten Zahn gebracht, mit selbstpolymerisierendem Kunststoff oder Komposite aufgefüllt und auf die isolierten Zähne aufgesetzt.

Nachdem der Kunststoff von der plastischen in die elastische Phase übergegangen ist, werden die Abformung und das Provisorium aus dem Mund genommen. Das überflüssige Material wird zügig mit einer Kronenschere entfernt. Das Provisorium wird dann daraufhin mehrmals auf die Pfeilerzähne aufgesetzt und wieder entfernt. Sobald der Kunststoff warm und fester wird, wird das Kunststoffprovisorium abgenommen und in heißem Wasser endgehärtet. Die sich im Kunststoff abzeichnende Präparationsgrenze kann mit einem dünnen Stift markiert werden. Anschließend werden die über die Präparationsgrenze reichenden Überstände mit einer Fräse entfernt, und das Provisorium wird anprobiert.

Nach dem Ausarbeiten und Polieren erfolgt die Eingliederung des Provisoriums mit eugenolfreiem provisorischen Zement. Die Eugenolfreiheit erlaubt ein späteres Unterfüttern mit Kunststoff.

Auf dem Gipsmodell wird dann vom Zahntechniker der Zahnersatz aus Legierungen, Titan, Keramik, Kunststoff oder der Kombination verschiedener Materialien hergestellt.

Verblendkronen besitzen eine metallische Basis, die ganz oder teilweise mit Keramik oder Kunststoff überzogen wird. Die Herstellung der verschiedenen Kronentypen erfolgt zumeist durch die Modellation der Krone in Wachs auf dem Gipsmodell.

Anschließend wird das Wachsobjekt nach der verlorenen Wachsmethode in Metall gegossen. Nach dem Entfemen der Gußform vorn Rohling erfolgt das Zurücksetzen und Anpassen auf dem Modellstumpf des Zahns. Mit diesem aufwendigen Verfahren lassen sich im zahntechnischen Labor paßgenau Kronen anfertigen, sofern alle einzelnen Arbeitsschritte mit hoher Präzision und fehlerfrei durchgeführt werden.

Nicht immer ist jedoch gewährleistet, daß sich die Krone auch in der Mundhöhle auf dem präparierten Zahnstumpf mit der erforderlichen Paßgenauigkeit fügen läßt. Bereits kleinste Ungenauigkeiten bei der Abformung der Modellerstellung und zahntechnischen Fertigung der Krone können zu Paßungenauigkeiten und klinischen Problemen führen. Mangelnder Randschluß aufgrund ungenügender Passung der Krone hat ein beschleunigtes Auswaschen des Befestigungsmaterials aus dem Fügespalt zwischen Zahnstumpf und Krone zur Folge. Häufig sind daher kostenintensive Neuanfertigungen erforderlich, um eine exakt passende Krone herzustellen, die sich durch einen ausreichend kleinen Fügespalt und eine präzise Passung auf den beschliffenen Zahnstumpf auszeichnet.

Um dieses Problem - speziell bei Vollkeramik-Zahnersatz - zu vermeiden, wurde die sogenannte Adhäsiv-Technik entwickelt. Hierbei wird eine exakte Formgebung der Innenseite der Zahnersatzhülse gefordert. Das hochpaßgenaue Anliegen an den Zahnstumpf bzw. die Präparation des Zahnes erfolgt durch ein Ergänzungsmaterial, nämlich einen pastösen, fließfähigen Dentalkunststoff, beispielsweise einen polymeren Werkstoff, vorzugsweise ein Kompositmaterial geeigneter Konsistenz und Viskosität, der in einer solchen Menge in die innere Ausnehmung der Zahnersatzhülse gefüllt wird, daß er den zwischen Zahnersatzhülse und gesehliffenem Zahnstumpf vorhandenen Hohlraum schlüssig auffüllt. Überschüssiger Kunststoff quillt beim Aufsetzen und der Positionierung der Zahnersatzhülse auf dem Zahnstumpf an der Unterkante der Zahnersatzhülse heraus und kann dort entfernt werden. Auf diese Weise wird wenig von dem stark schrumpfenden, selbstpolymerisierenden Kunststoff bzw. Komposit eingesetzt.

Diese Methoden setzen die Zusammenarbeit eines Zahnarztes und eines zahntechnischen Labors voraus. Sie haben darüber hinaus den Nachteil, daß der Patient, wie beschrieben, mit einem Provisorium versorgt werden muß, welches im Laufe der Behandlung - in manchen Fällen mehrmals - abgenommen und aufgesetzt werden muß. Aus ökonomischen oder logistischen Gründen kann diese Methode nicht immer angewandt werden. Die beschriebene Methode der "Immediatversorgung" kann für permanenten Zahnersatz nicht angewandt werden, da die Spielpassung zu groß ist und der im Mund aushärtende Kunststoff bzw. Kompositwerkstoff zu stark schrumpft. Außerdem ist der Werkstoff aufgrund von Farbabweichungen ästhetisch nicht akzeptabel.

Die bisher beschriebenen CAD-CAM-Verfahren für die Herstellung von Zahnersatz stellen entweder nur eine Hülse aus hochfester Keramik her, die durch handwerkliche Tätigkeit zu einer anatomischen und morphologischen Krone ergänzt wird (z.B. Procera), oder sie fräsen bzw. schleifen die Anatomie und Morphologie des Zahnes individuell nach Konstruktion durch ein digitales Design-Programm (z.B. Cerec).

Die WO 99/ 13796 zeigt ein Verfahren, bei dem aus einem Rohling (Blank) eine Krone hersgestellt wird. Der Rohling besteht aus einem monochromatischen Block.

Die gesamte Außenfläche muss bearbestet werden, um eine funktionsgeordite Krone herzustellen.

Herkömmliche fabrikatorisch hergestellte Konfektionszähne eignen sich zwar als "Immediatversorgung", nicht aber für einen definitiven Zahnersatz, da ihr Umfang im Bereich der Präparationsgrenze des beschliffenen Zahnes nicht groß genug ist und sie zusätzlich insbesondere palatinal zu kurz gestaltet sind, was zur Folge hat, daß die großvolumigen Ergänzungen in dem marginalen Passungsbereich wegen des Schrumpfungsfaktors des Kompositwerkstoffes nicht möglich sind.

Es ist Aufgabe der Erfindung, ein Verfahren zu schaffen, das zur Präparation der Zähne eines Sortiments von funktionsgerecht und farbgerecht Konfetionierten, fabrikatorisch ungestellten Zähnen geeignet in

Erfindungsgemäß wird ein Verfahren zur Präparation von fabrikatorisch hergestellten Zähnen eines Zahnsortiments vorgeschlagen, das folgende Schritte umfaßt:
- Aufnahme der Ist- Situation eines präparierten Zahnes im Mund eines Patienten oder von einem Modell des Patientenmundes;
- Auswahl eines funktions-und farbgerechten Zahnes aus einem Sortiment von konfektionierten, fabrikatorisch hergestellten Ober und Unterkieferzähnen in verschiedenen Größen und Farben, wobei der ausgewählte Zahn im marginalen Bereich größer als die Außenabmaße des präparierten Zahnes ist ;
- der konfektionierte Zahn wird in eine Vorrichtung gespannt, die ihn virtuell über die Situation des präparierten Zahnes korrelliert;
- die Innenpassung zum präparierten Zahn wird durch Ausfräsen des Inneren hergestellt ;
- die Außenpassung wird durch Abfräsen bis auf die Präparationsgrenze hergestellt, so dass ein passender Anliegen an den praparierten Zahm gewährleistet ist.

Zur Durchführung des erfindungsgemäßen Verfahrens wird dem Zahnarzt ein erfindungsgemäßes Sortiment von Ober- und Unterkieferzähnen in verschiedenen Größen und Farben zur Verfügung gestellt Mit einer Digitalisierungseinheit nimmt er die ist-Situation im Mund des Patienten oder von einem Modell des Patientenmundes auf. Es wird ein passender Zahn ausgewänlt. Die Auswahl kann computergestützt erfolgen. Der ausgewählte Zahn wird in eine Fräsmaschine, vorzugsweise eine CNN-Fräsmaschine, eingesetzt, virtuell über die Situation des präparierten Zahns korreliert und achsengerecht mit einem Werkzeug so beigeschliffen, daß ein passendes Anliegen an den präparierten Zahn gewährleistet ist.

Schließlich wird die Krone mit ihrer inneren Ausnehmung auf den Zahnstumpf gesetzt, wobei der Raum zwischen der Zahnersatzhülse und dem Zahnstumpf beim - vorzugsweise adhäsiven - Befestigen durch einen plastisch verformbaren Dentalwerkstoff gefüllt wird, so daß schließlich ein individueller, paßgenauer Zahnersatz bereitgestellt wird, welcher mit üblichen Dentalmaterialien und Instrumenten in das Gebiß des Patienten eingegliedert werden kann.

Mit dem erfindungsgemäßen Verfahren ist es möglich, Zähne eines funktions-und fargerecht Konfectioniet fabrikatonish hergestellten Zahnsortiments mit minimalem Fügespalt und mit präzisem Randabschluß des Zahnersatzes auf den Zahnstumpf abzustimmen. Aufgrund des verfahrensbedingt minimierten Fügespaltes der intraoralen, angepaßten Zahnersatzhülse ist beim Eihsetien dieser Hülse mit einem dentalen Befestigungswerkstoff ein dichter, spaltfreier Randabschluß nach dem adhäsiven Verkleben/Zementieren auf dem zu restaurierenden Zahn gewährleistet.

Vorzugsweise wird eine Spielpassung im marginalen Bereich von unter 100 µm erzeugt. Die Spielpassung im inneren Bereich liegt vorzugsweise unter 200 µm.

Der Zahnstumpf selbst kann mit üblichen Mitteln zum Einsetzen des künstlichen Zahnersatzes vorbehandelt werden, wie zum Beispiel durch einen Schmelz-Dentin-Haftvermittler.

Gegenüber dem vorbekannten Stand der Technik stellt der erfindungsgemäße Zahnersatz eine entscheidende Verbesserung im Hinblick auf eine sofortige Versorgung dar. Gegenüber den bekannten Provisorien kann in einem Durchlauf ein definitiver Zahnersatz mit geringem ökonomischen Einsatz erreicht werden. Die Zahnrestauration erfolgt in einer Behandlungssitzung. Eine provisorische Versorgung des präparierten Zahnes bis zur zahntechnischen Fertigstellung des Zahnersatzes entfällt. Das Verfahren kann mit geringem technischen Aufwand, nämlich der Digitalisierung und einer Zwei-Achsen-CNN-Maschine verwirklicht werden. Ansonsten kommen nur bekannte zahnärztliche Prozeßabläufe zur Anwendung.

Die erfindungsgemäß hergestellte Krone kann auf den Zahnstumpf mit üblichen Mitteln in Analogie zum Befestigen einer Krone bzw, eines Inlays oder einer Brücke eingesetzt werden.

Die Erfindung wird im Folgenden anhand der beigefügten Abbildungen näher erläutert:
- **Fig. 1**: zeigt einen präparierten Zahn;
- **Fig. 2**: zeigt einen üblichen Konfektionszahn;
- **Fig.3**: zeigt die Projektion von einem üblichen Konfektionszahn über einen präparierten Zahn;
- **Fig. 4**: zeigt die Projektion eines modifizierten Konfektionszahnes über das Original
- **Fig. 5**: zeigt eine Projektion eines Konfektionazahns über den präparierten Zahn;
- **Fig. 6**: zeigt den Präparationsbereich;
- **Fig. 7**: zeigt den präparierten Konfektionszahn über dem präparierten Zahn;
- **Fig. 8**: projiziert den abgespanten Konfektionszahn über den präparierten Zahn.

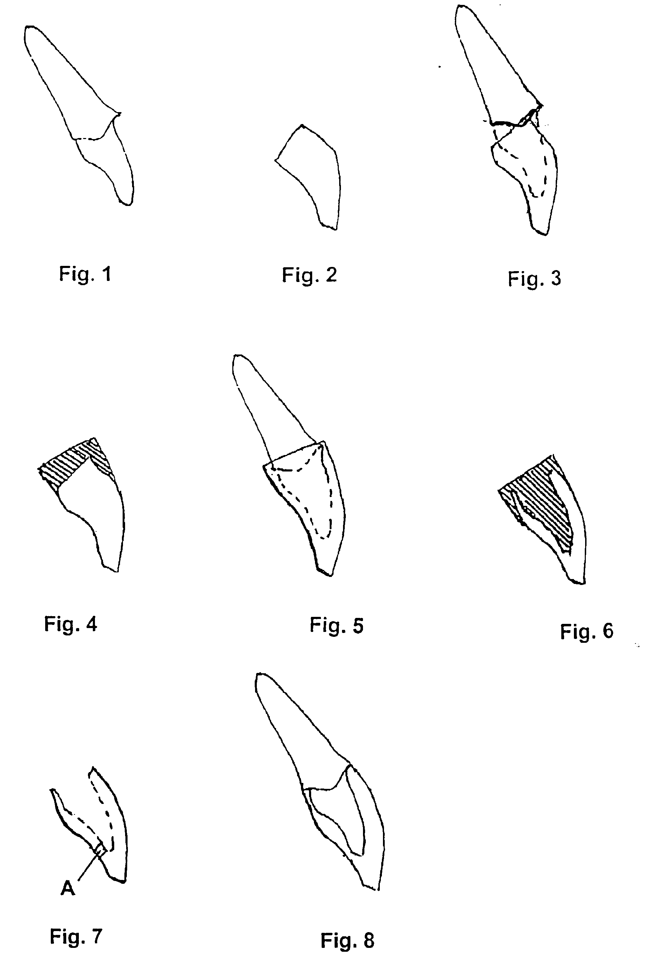

In **Fig.** 1 ist der präparierte Zahn eines Patienten zu erkennen, der überkront werden soll.

**Fig. 2** zeigt einen üblichen Konfekfionszahn, der zur dauerhaften Versorgung nicht geeignet ist.

In **Fig. 3** ist zu erkennen, daß der Konfektionszahn gemäß Fig. 2 insbesondere im marginalen Bereich zu geringe Abmessungen aufweist, um eine vollständige Überkronung des präparierten Zahns zu ermöglichen. Zur Präparation muß auch die Außenfläche des Konfektionszahns perforiert werden, was eine in diesem Bereich niedrigere Oberflächenqualität mit sich bringt.

**Fig.4** zeigt einen Zahn eines fabrikatorisch hergestellten Zahnsortiments das zur Durchführung des erfindungsgemäßen Verfahrens geeignet ist. In der Figur ist der erfindungsgemäße Zahn über einen herkömmlichen, fabrikatorisch hergestellten Zahn projiziert, wobei die geänderten Abmessungen im schraffierten Bereich deutlich sind.

In **Fig. 5** wird ein Konfektionszahn über den präparierten Zahn des Patienten projiziert. Es ist deutlich, daß die Abmessungen des Konfektianszahns ausreichen, um eine dauerhafte Überkronung zu ermöglichen.

In **Fig. 6** ist dargestellt, in welchem Bereich der fabrikatorisch hergestellte Zahn abgespant werden muß.

**Fig.7** zeigt das abgespante Ergebnis. Zusätzlich ist ein palatinafer Abzugskanal A erkennbar, der dazu dient, daß ein Adhäsiv-Werkstoff austreten kann und nicht in den Bereich des Zahnfleisches gedrückt wird.

In **Fig. 8** ist das abgespante Ergebnis in der Projektion über den präparierten Zahn des Patienten dargestellt. Es ist zu erkennen, daß eine nahezu spielfreie Passung erreicht wird, die das Eindringen von Bakterien unterbindet. Der in einer Sitzung hergestellte Zahnersatz ist eine dauerhafte Lösung.

## Patentansprüche

1. Verfahren zur Präparation von fabrikatorisch hergestellten Zähnen eines Zahnsortiments mit folgenden Schritten:
- Aufnahme der Ist-Situation eines präparierten Zahns im Mund eines Patienten oder von einem Modell des Patientenmundes;
- Auswahl eine function- und farberecheten Zahnes aus einem Sortiment von Konfektionisten, fabrikatorisch hergestellten Ober- und und Unterkieferzähnen in verschiedenen Größen und Farben wobei der ausgewählte Zahn in marginalen Bereich größer als die Außenabmaße des präparierten Zahns ist;
- der konfektionierte Zahn wird in eine Vorrichtung gespannt, die ihn virtuell über die Situation des präparierten Zahns korreliert;
- die Innenpassung zum präparierten Zahn wird durch Ausfräsen des Lumens hergestellt;
- die Außenpassung wird durch Abfräsen bis auf die Präparationsgrenze hergestellt, so dass ein passender Anliegen an den präparierten Zahn gewährleistet ist.

2. Verfahren nach Anspruch 1. **dadurch gekennzeichnet, dass** eine Spielpassung im marginalen Bereich von unter 100 µm erzeugt wird.

3. Verfahren nach Anspruch 1 oder 2 **dadurch gekennzeichnet, dass** eine Spielpassung im inneren Bereich von unter 200 µm erzeugt wird.

4. Verfahren nach einem der Ansprüche 1 bis 3 **dadurch gekennzeichnet, dass** die präparierte Hülsenkrone mittels eines dentalen Befestigungswerkstoffes, vorzugsweise nach der Adhäsivtechnik, befestigt wird.

## Claims

1. Method for preparing manufactured teeth of a range of teeth, comprising the following steps:
- recording of the actual situation of a prepared tooth in a patient's mouth, or a model of the patient's mouth;
- choice of tooth performing the correct function and of the correct colour from a range of manufactured maxillary and mandibular teeth in various sizes and colours, the tooth selected being larger in the marginal region than the outer dimensions of the prepared tooth;
- the manufactured tooth is clamped in a device which correlates it virtually via the situation of the prepared tooth;
- the internal fit for the prepared tooth is produced by cutting out the lumen;
- the external fit is produced by cutting off to the preparation limit so that fitting on the prepared tooth is ensured.

2. Method according to Claim 1, **characterized in that** a play of less than 100µm is produced in the marginal region.

3. Method according to Claim 1 or 2, **characterized in that** a play of less than 200pm is produced in the inner region.

4. Method according to any of Claims 1 to 3, **characterized in that** the prepared shoulderless crown is fixed by means of a dental fixing material, preferably by the adhesive technique.

## Revendications

1. Procédé de préparation de dents d'un assortiment de dents fabriquées en usine, comportant les étapes suivantes :
- la photographie de la situation réelle d'une dent préparée, dans la bouche d'un patient, ou d'un modèle de la bouche du patient ;
- la sélection d'une dent, dont la fonction et la couleur sont correctes, dans un assortiment de dents supérieures et inférieures, confectionnées, fabriquées en usine, en différentes tailles et différentes couleurs, la dent sélectionnée étant, dans sa zone marginale, plus grande que les dimensions extérieures de la dent préparée ;
- la dent confectionnée est serrée dans un dispositif, qui va la corréler virtuellement avec la situation de la dent préparée ;
- l'adaptation intérieure à la dent préparée est réalisée par fraisage du lumen ;
- l'adaptation extérieure est réalisée par fraisage jusqu'à la limite de préparation, de façon à garantir un ajustement à la dent préparée.

2. Procédé selon la revendication 1, **caractérisé en ce qu'**un ajustement avec jeu inférieur à 100 µm est produit dans la zone marginale.

3. Procédé selon la revendication 1 ou 2, **caractérisé en ce qu'**un ajustement avec jeu inférieur à 200 µm est produit dans la zone intérieure.

4. Procédé selon l'une des revendications 1 à 3, **caractérisé en ce que** la couronne à collier telle que préparée est fixée à l'aide d'un matériau pour fixation dentaire, de préférence par la technique utilisant un adhésif.
